# EUROPEAN PATENT APPLICATION

(11) **EP 3 409 827 A1**
(43) Date of publication of application: **05.12.2018**
(21) Application number: 17743677.1
(22) Date of filing: 20.01.2017
(51) Int. Cl.: D06F 58/24, B23P 15/26, F25B 39/00

(54) **FIN HEAT EXCHANGER FOR CLOTHES WASHING MACHINE OR CLOTHES DRYER, AND METHOD FOR MANUFACTURING SAME**

(30) Priority: 29.01.2016 CN 201610065765
(71) Applicant: Changzhou Changzheng Evaporator Co., Ltd., Changzhou, Jiangsu 213000 (CN)
(72) Inventor: HONG, Weiguo, Changzhou Jiangsu 213000 (CN); ZHENG, Lei, Changzhou Jiangsu 213000 (CN); LIU, Mingxing, Changzhou Jiangsu 213000 (CN); CHEN, Lanhua, Changzhou Jiangsu 213000 (CN)
(74) Representative: Dargiewicz, Joanna
(86) International application number: PCT/CN2017/071904
(87) International publication number: WO 2017/129062

(57) **Abstract**

A fin heat exchanger comprises a set of fins and a heat exchange tube alternating with the set of fins. A metal tube is bent multiple times and then folded at least once to form at least two columns of bent tubing, and then the heat exchange tube is inserted as a whole into the set of fins. In the heat exchanger, no damage resulting from a need for welding is caused to the heat exchange tube, thus the integrity of the heat exchange tube is protected; when a heat-exchange fluid flows through an integrated heat exchange tube, no impact damage is caused to the heat exchange tube as a result of a large fluid impact force, and no leaking of the fluid medium is caused by high-temperature fluid flowing into the heat exchange tube; the heat exchange performance of the heat exchange tube is guaranteed, and there is no problem of unevenness of the inside walls between the welded tube connection ends obstructing the flow of the fluid medium, thereby causing the heat exchanger to have low performance.

## Description

### CROSS-REFERENCE TO RELATED APPLICATIONS

This application is a continuation of International Patent Application No. PCT/CN2017/071904 with a filing date of Jan. 20, 2017, designating the United States, now pending, and further claims priority to Chinese Patent Application No. 201610065765.2 with a filing date of Jan. 29, 2016. The content of the aforementioned applications, including any intervening amendments thereto, are incorporated herein by reference.

### TECHNICAL FIELD

The disclosure relates to the technical field of heat exchangers, and especially relates to a fin heat exchanger for a clothes washing machine or a clothes dryer and a method for manufacturing the same.

### BACKGROUD OF THE PRESENT INVENTION

A heat exchanger is the equipment for transferring heat from the heat fluid to the cold fluid. Heat exchangers play an important role in chemical, petroleum, power, food and many other industrial productions. They can be used as heaters, coolers, condensers, evaporators and reboiler, etc. in chemical industry. Heat exchangers are also used in daily life such as in refrigerators, washing machines, dry cleaners and air conditioners. The conventional heat exchangers used in washing machines and clothes dryers are mainly parallel-flow type or fin heat exchangers with copper tubes. Although the fin heat exchangers are very mature in structure and manufacturing process, there are still some defects in detail.

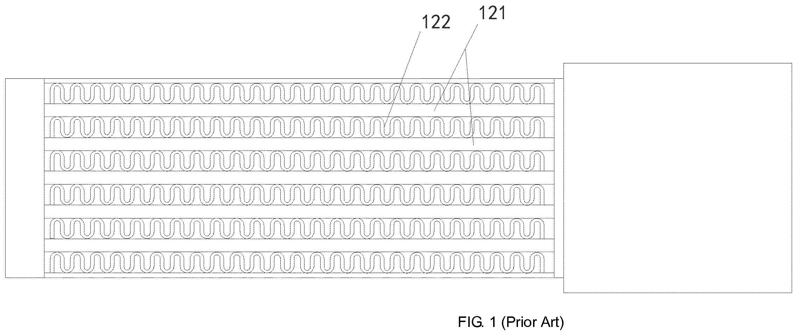

A conventional parallel-flow heat exchanger is shown in Fig. 1, which includes square tubes 121 arranged in parallel, and a heat exchange sheet 122 arranged between the square tubes. The heat exchange medium pass through the square tubes and transfer heat through the diffusion of the heat exchange sheet. This heat exchange structure is low in heat exchange efficiency and large in size.

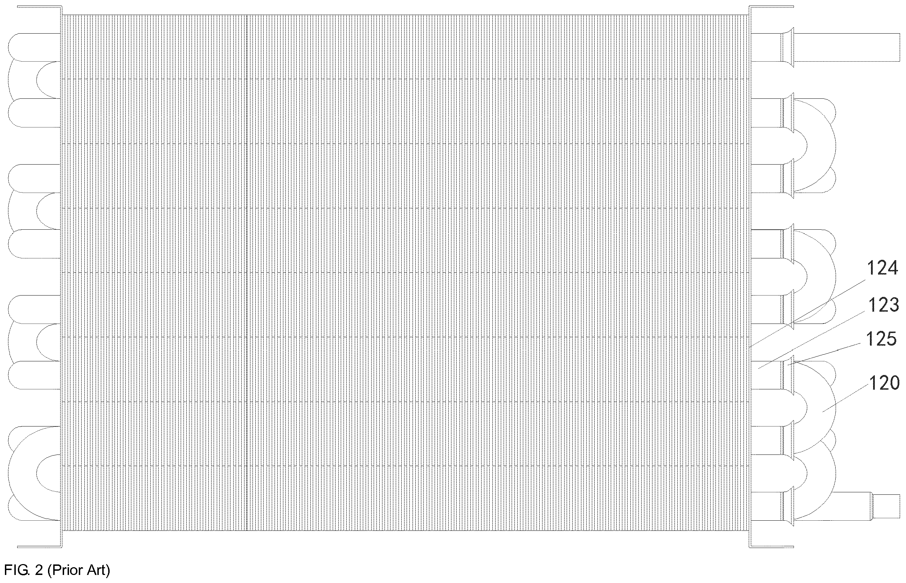

A conventional fin heat exchanger with copper tubes is shown in Fig. 2, which comprises a plurality of heat exchange copper tubes 123 and a plurality sets of fins 124. The heat exchange copper tubes are inserted into each set of fins, and the heat exchange copper tubes are communicated through the connection elbows 120. The two ends of the heat exchange copper tube are flared to form two flaring ends 125 for inserting the connection elbow. Then the heat exchange copper tube and the connection elbow are welded together. In this way, it cannot be guaranteed that the inner wall of the heat exchange copper tube and the inner wall of the connection elbow are smooth. Besides, there are solder joints between the heat exchange copper tube and the connection elbow. This kind of method is very common, however, the input cost is large, the working procedure is complicated, the air tightness of the heat exchanger is poor, and it is easy to cause the leakage. Furthermore, the circulation of the medium in the tube will be affected, resulting in the poor heat exchange performance of the heat exchanger.

A fin heat exchanger containing a U-shaped heat exchange tube is provided in a patent numbered CN204830298U. The two ends of the U-shaped heat exchange tube in the fin heat exchanger are connected by elbows. The elbows and the heat exchange tube are welded together. That is to say, the heat exchange tube is formed by connecting a plurality of tubing to each other through welding. There are solder joints at the connections between tubes since the heat exchange tube and the elbows are connected by welding.

In addition, a condenser for drying clothes in an automatic washing machine is provided in a patent numbered CN202969102U, which comprises a number of tubes arranged in parallel from top to bottom, and fins arranged between adjacent tubes and arranged on the external walls of the top tube and the bottom tube. The tubes and the fins are composed of a metal core for heat exchange. The cross-section of the tube is a flat rectangular. The tubes are made of a piece of bent and brazed single composite aluminum alloy material. Each end of the metal core is connected with a plastic cover to form a draw-type structure as a whole. The plastic cover is provided with a flat rectangular window docked with the tube, and a rubber sheet is arranged around the plastic cover. According to its description, the tubes are made of a piece of bent and brazed composite aluminum alloy material. Similarly, the tube through which the medium pass is processed by welding. That is to say, solder joints are produced on the tube.

Whether it is a fin heat exchanger disclosed in the patent numbered CN20483096U or a condenser for drying clothes disclosed in the patent numbered CN202969102U, both of them have welding points in the manufacturing of tubes in which the medium is circulating. No matter welding is used in connecting or manufacturing tubes, the following shortcomings are existed.

First, in order to obtain a better heat exchange performance, the thickness of the tube through which the fluid passes is relatively thin. The high temperature produced by welding may easily lead to the damage to the heat exchange tube during welding, so it is difficult to use weld and guarantee the quality of the welding position.

Second, due to the welding process, when the medium in the heat exchanger is circulating, the impact force generated by the fluid and the temperature of the medium entering the heat exchanger will easily cause the solder joint to fall off. The drop of the solder joint will be even aggravated after a long time of use. It will cause leakage at welding positions, affect the heat exchange performance of the heat exchanger, and finally lead to the breakdown of the heat exchanger that loses its heat exchange function, which may cause irreparable loss to enterprises and equipment that use the heat exchanger.

Third, welding is performed onto the circle around the connection of the tube in the patent numbered CN204830968U, and the tube is made of a piece of bent and brazed composite aluminum alloy material in the patent numbered CN202969102U. Due to the small size of the heat exchanger, welding is difficult and takes a long time, leading to a low efficiency in producing the heat exchanger / condenser and a high processing cost for enterprises.

### SUMMARY OF PRESENT INVENTION

The technical problem to be solved in the disclosure is to provide a fin heat exchanger for a clothes washing machine or a clothes dryer, and a method for manufacturing the same, which can overcome the problems of leakage, unstable heat exchange performance and short service life due to the solder joints in existing heat exchange tubes.

In order to solve the technical problem, the following technical solutions are provided in the disclosure.

A fin heat exchanger for a clothes washing machine or a clothes dryer is provided, which comprises a set of fins and a heat exchange tube alternating with the set of fins; the heat exchange tube is made of a metal tube which has been continuously bent multiple times and then folded at least once to form at least two columns of bent tubing, then the heat exchange tube is inserted as a whole into the set of fins; the two ends of the heat exchange tube locate outside of the set of fins, one end is acted as a medium inlet and the other end is acted as a medium outlet; the metal tube is an aluminum tube or a copper tube.

Further, the set of fins comprises multiple heat exchange fins arranged with a space between adjacent fins; multiple sockets are provided on each heat exchange fin for inserting the bent tubing of the heat exchange tube, and each socket corresponds to a bent tubing of the inserted heat exchange tube.

Further, the sockets on adjacent heat exchange fins in the set of fins are overlapped after being projected from the upper or lower surfaces of the heat exchange fins.

Further, the set of fins comprises at least two heat exchange fins arranged side by side, the side-by-side heat exchange fins in adjacent sets of fins are integrally formed, and 2-12 sockets are provided along the horizontal direction of the integrally formed heat exchange fins, 2-20 sockets are provided along the vertical direction of the integrally formed heat exchange fins.

Further, the heat exchange fins in adjacent sets of fins are staggered or in a same plane, all the sets of fins consist a fin heat exchange unit for inserting the heat exchange tube; 2-12 sockets are provided along the horizontal direction of the fin heat exchange unit, 2-20 sockets are provided along the vertical direction of the fin heat exchange unit.

Further, the sockets are arranged on corresponding heat exchange fins in an inclined way, the angle A between the central line of the sockets and the horizontal direction of the heat exchange fins is 0-90°.

Further, each socket comprises two curved jacks and a linear transfer slot located therebetween to connect the two curved jacks, two linear sections of the bent tubing in the heat exchange tube are inserted correspondingly into the two curved jacks respectively.

Further, the spaces between adjacent heat exchange fins are equal or not, and adjacent heat exchange fins are parallel or the extending planes of adjacent heat exchange fins are crossed.

Further, the heat exchange fins are straight-typed or wave-typed.

Further, a bent part of the heat exchange tube is curved.

Further, except the bent part at folded position in the heat exchange tube, the planes of adjacent bent tubing at other position form an angle B.

Further, the external diameter φ of the heat exchange tube is 6-12.7mm, the wall thickness d1 of the heat exchange tube is at least 0.4mm, and the thickness d2 of the heat exchange fin is at least 0.09mm.

Further, the inner wall of the heat exchange tube has a smooth surface or guiding teeth are arranged on the inner wall along a length direction of the heat exchange tube.

Using the above technical solutions, the heat exchange tube is formed by a continuously bent and folded metal tube, and then the formed heat exchange tube is inserted into a set of fins as a whole. During the whole process, no sold joint is produced on the whole heat exchange tube. The heat exchanger with such a structure solves the current problems. No damage resulting from a need for welding is caused to the heat exchange tube, thus the integrity of the heat exchange tube is protected. When the heat-exchange fluid flows through an integrated heat exchange tube, no impact damage is caused to the heat exchange tube as a result of a large fluid impact force, and no leaking of the fluid medium is caused by high-temperature fluid flowing into the heat exchange tube, so the heat exchange performance of the heat exchange tube is guaranteed. There is no problem of unevenness of the inside walls between the welded tube connection ends obstructing the flow of the fluid medium and thereby causing the heat exchanger to have low performance.

Welding is not needed, namely, the heat exchange tube is continuously bent and folded to form a whole, and then the heat exchange tube is inserted into the set of fins as a whole. In this way, the manufacturing of the heat exchanger is simple and convenient, which improves the manufactory efficiency of the heat exchanger, and reduces the production cost of the heat exchanger, so it's convenient to popularize the disclosure. The dryer and washing machine with the heat exchanger have a guarantee in the drying function, and there will be no frequent maintenance and replacement due to the heat exchanger problems.

A clothes washing machine or a clothes dryer is provided, which comprises the aforementioned fin heat exchanger, the heat exchange tube is made of a metal tube which has been continuously bent multiple times and then folded at least once to form at least two columns of bent tubing, then the heat exchange tube is inserted as a whole into the set of fins. The drying performance of the clothes washing machine and the clothes dryer can be improved.

A method for manufacturing a fin heat exchanger of a clothes washing machine or a clothes dryer is provided, which comprises following steps:
- first, determining a total length of a metal tube and an amount of heat exchange fins in a set of fins according to the size of the heat exchanger;
- second, determining the bending times of the metal tube and the radius R at the bent part;
- third, bending the metal tube according to the radius R and the bending times, then folding the bent tube at least one time to form at least two columns of bent tubing, thus obtaining a heat exchange tube;
- fourth, providing multiple sockets for inserting the bent tubing of the heat exchange tube on each heat exchange fin by a stamping device wherein the corresponding sockets on each heat exchange fin are overlapped after projection;
- fifth, arranging the heat exchange fins successively on an assembling mold with a space between adjacent heat exchange fins wherein the sockets at corresponding locations on adjacent heat exchange fins on the assembling mold are overlapped after projection in order to obtain a set of fins consisted of arranged heat exchange fins;
- sixth, inserting the heat exchange tube from the third step into the set of fins from the fifth step as a whole, inserting the bent tubes of the heat exchange tube into the corresponding sockets on the set of fins one by one wherein while the bent part of the bent tube in the heat exchange tube is outside of the set of fins after assembly; and
- seventh, inletting fluid into the heat exchange tube to expend the tube so as to form a firm connection between the heat exchange tube and the set of fins, thus obtaining an integral type of heat exchanger, and the manufacturing process can be finished after taking down the obtained heat exchanger from the assembling mold.

Further, in the third step, except the bent tubing at folded position in the heat exchange tube, the planes of adjacent bent tubing at other position form a bent angle of 0-90°.

Further, the sockets are arranged on the heat exchange fins in an inclined way, in a horizontal way or in a vertical way.

In the heat exchanger, the heat exchange tube is made of a continuously bent metal tube, and the formed heat exchange tube is inserted into the set of fins. The heat exchanger can be used in an evaporator or a condenser. The advantages of the heat exchanger are as follows. The heat exchanger is an integral whole despite its inlet and outlet. As there is no solder joint, the leakage risk is eliminated, the production process is simple, the cost is low, and the heat exchange performance is efficient. The product has broken the traditional concept and application category of the heat exchanger used in the washing machine and dryer, which belongs to the technological innovation and breakthrough in the equipment products in the industry. When the heat exchanger is applied in the field of washing machine and dryer, the product design has a better heat exchange performance and higher technical difficulty compared with the conventional product, mainly reflected in the assembling process of integrally bending and expanding multiple rows of tubes. The manufacturing process brings breakthrough in the technical ability of the conventional process, highlighting the advancement of the disclosure.

### DESCRIPTION OF THE DRAWINGS

Fig. 1 is a structure diagram of a conventional heat exchanger;
Fig. 2 is a structure diagram of a bent position of a heat exchange tube in the conventional heat exchanger;
Fig. 3 is a structure diagram of a heat exchanger according to a first embodiment of the disclosure;
Fig. 4 is a vertical view of the structure in Fig. 3;
Fig. 5 is a left view of the structure in Fig. 3;
Fig. 6 is a right view of the structure in Fig. 3;
Fig. 7 is a structure diagram of a heat exchanger according to a second embodiment of the disclosure;
Fig. 7A is a rear view of the structure in Fig. 7;
Fig. 8 is a planar structure diagram of a single heat exchange fin according to the disclosure;
Fig. 9 is a planar structure diagram of a heat exchange tube after being bent multiple times according to the disclosure;
Fig. 10 is a shape diagram of a heat exchange tube after being folded;
Fig. 11 is a left view of the structure in Fig. 10;
Fig. 12 is a sectional structure diagram of the heat exchange tube according to a first example of the disclosure;
Fig. 13 is a sectional structure diagram of the heat exchange tube according to a second example of the disclosure;
Fig. 14 is a sectional structure diagram of the heat exchange tube according to a third example of the disclosure;
Fig. 15 is a sectional structure diagram of the heat exchange tube according to a fourth example of the disclosure;
Fig. 16 is a sectional structure diagram of the heat exchange tube according to a fifth example of the disclosure;
Fig. 17 is another structure diagram of the bent part of the bent tubing in the heat exchange tube according to the disclosure;
Fig. 18 is a structure diagram of a heat exchanger according to a third embodiment of the disclosure;
Fig. 19 is a structure diagram of a heat exchanger according to a fourth embodiment of the disclosure;
Fig. 20 is a structure diagram of a heat exchanger according to a fifth embodiment of the disclosure;
Fig. 21 is a structure diagram of a heat exchanger according to a sixth embodiment of the disclosure;
Fig. 22 is a structure diagram of a heat exchanger according to a seventh embodiment of the disclosure; and
Fig. 23 is a structure diagram of a heat exchanger according to an eighth embodiment of the disclosure.

In the drawings, 100 represents a fin heat exchanger, 101 represents a set of fins, 102 represents a heat exchange tube, 103 represents a bent tubing group, 104 represents a medium inlet, 105 represents a medium outlet, 106 represents a heat exchange fin, 107 represents a space, 108 represent bent tubing, 109 represents a socket, 110 represent a curved jack, 111 represents a transfer slot, 112 represents a linear tubing, 113 represents a bent position, 114 represents a folded position, 115 represents an internal slot, 116 represents internal teeth, 117 represents a first sidewall, 118 represents a second sidewall, 119 represents a slot bottom wall, 120 represents a connection elbow.

### DETAILED DESCRIPTION OF PREFERRED EMBODIMENTS

In order to make the purposes, technical solutions and advantages of the disclosure more clear, technical schemes of the embodiments in the disclosure will be clearly and entirely described according to the drawings in the following. Obviously, the embodiments described are part of the embodiments of the disclosure, but not all. Any other embodiments made by the skilled in the art without creative efforts based on above embodiments of the disclosure should fall into the scope of the disclosure.

A heat exchanger according to a first embodiment of the disclosure will be illustrated referring to Fig.s 3-6 and 8-11.

A fin heat exchanger 100 for a clothes washing machine or a clothes dryer comprises a set of fins 101 and a heat exchange tube 102 alternating with the set of fins 101. The heat exchange tube is made of a metal tube which has been continuously bent multiple times and then folded at least once to form at least two columns of bent tubing groups 103, and then the heat exchange tube is inserted as a whole into the set of fins. The two ends of the heat exchange tube locate outside of the set of fins, one end is acted as a medium inlet 104 and the other end is acted as a medium outlet 105. The metal tube is an aluminum tube or a copper tube which has a good heat-conducting performance, and an aluminum tube is preferred considering of the manufacturing cost and machinability.

The set of fins comprises multiple heat exchange fins 106 arranged with a space 107 between adjacent fins. Multiple sockets 109 are provided on each heat exchange fin for inserting the bent tubing 108 of the heat exchange tube, and each bent tubing of the heat exchange tube is inserted into a socket correspondingly. It should be noted that, in the embodiment, each single heat exchange fin in the sets of fins is monolithic in order to improve the heat diffusion performance of the whole heat exchange fin. The heat exchange fin can be made of aluminum sheet, copper sheet or other metal sheet which has a good heat-conducting performance.

The sockets on adjacent heat exchange fins in the set of fins are overlapped after being projected by a same illuminant with a same distance to the upper or lower surfaces of the heat exchange fins, in order to ensure the smoothness and uniform consistency of inserting the heat exchange tube, and thus ensuring the heat exchange performance of the whole heat exchanger.

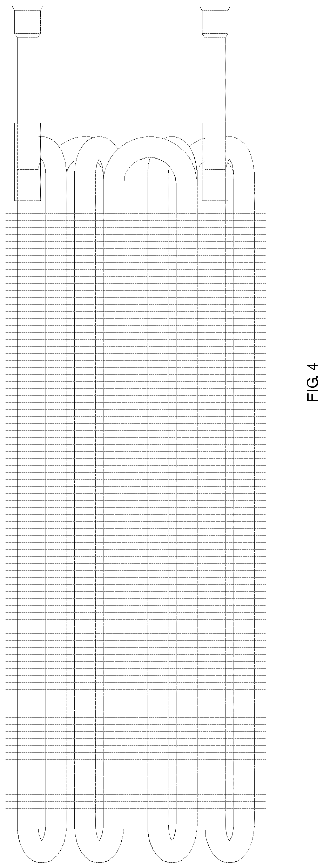

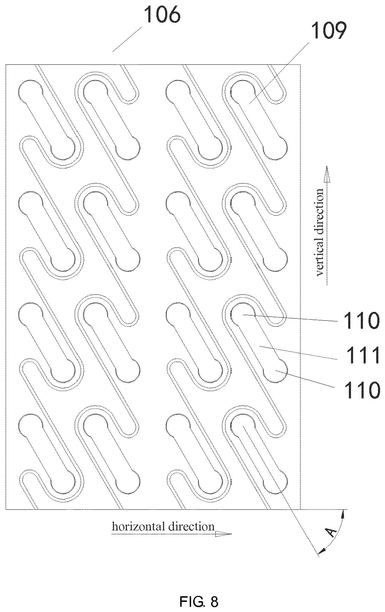

2-12 sockets are provided along the horizontal direction of each heat exchange fin, 2-20 sockets are provided along the vertical direction of each heat exchange fin. Referring to Fig. 8, 4 sockets are provided along the horizontal direction of the heat exchange fin, and 4 sockets are provided along the vertical direction of the heat exchange fin. Of course, the amount of sockets provided on horizontal or vertical direction of the heat exchange fin can be determined based on the demand, so that different sizes of heat exchangers can be made. In order to increase the positions for inserting the heat exchange tube on the heat exchange fin to improve the heat exchange surface and reduce the occupation space of the whole heat exchanger, the sockets are arranged on the heat exchange fin in an inclined way in a same direction, and the angle A between the central line of the sockets and the horizontal direction of the heat exchange fin is 0-90°. When the angle A is 0°, the whole sockets are consistent in direction with the horizontal direction of the heat exchange fin, namely the sockets are arranged in a horizontal direction on the heat exchange fin. When the angle A is 90°, the whole sockets are consistent in direction with the vertical direction of the heat exchange fin, namely the sockets are arranged in a vertical direction on the heat exchange fin. When the sockets are arranged in a inclined way, the angle A is preferably 50°-70°, such as 50°, 55°, 60°, 65° or 70°, which can improve the heat exchange surface and reduce the volume of the heat exchanger.

In order to ensure a firm combination between the sockets and the inserted bent tubing of the heat exchange tube, each socket comprises two curved jacks 110 and a linear transfer slot 111 located therebetween to connect the two curved jacks, and the width of the transfer slot is smaller than the curved jack but a little larger than the external diameter of the heat exchange tube, the curved jack is a circular arc jack with a central angle larger than 180°. Two linear sections 112 of the bent tubing in the heat exchange tube is inserted correspondingly into the two curved jacks respectively. When assembling, the bent part 113 at the bent tubing is inserted through the transfer slot while the two linear sections besides the bent tubing are located in two curved jacks. When assembling, there is a assembling space between the external wall of the linear tubing and the inner of the curved jack. The space between the linear tubing and the curved jack can be compensated by expanding the heat exchange tube to increase its external diameter after assembly, in order to make a firm combination between the external wall of the linear tubing and the inner of the curved jack, and then the heat exchange tube can be assembled into the set of fins firmly. With the sockets arranged in an inclined way and the bent tubing of the heat exchange tube inserted therein correspondingly, the whole heat exchange tube can be inserted on the set of fins in an inclined way. With this structure, the length of the heat exchange tube can be increased, namely the bending times of the heat exchange tube can be increased, so that the medium circulation time in the tube is lager, the heat exchange time is increased, the heat exchange performance is better, and the influence range is wider. Besides, it's convenience for assembling and maintaining as the structure of the heat exchange tube is compact but not intensive, and well arranged. With two curved jacks in a same socket corresponding to two linear sections in a same bent tubing, the volume of the heat exchanger can be reduced to deplete its occupation space, while the connection between the heat exchange tube and the heat exchange fin can be more compact and firm. Furthermore, it's convenience for assembling the heat exchange tube and the fin, so that the assembly efficiency and the product quality can be greatly improved, thus improving the business benefit.

In the present embodiment, the spaces between adjacent heat exchange fins are equal or not, and adjacent heat exchange fins are parallel or the extending planes of adjacent heat exchange fins are crossed. In order to make the heat exchange performance of the heat exchanger better, the spaces between adjacent heat exchange fins are preferred to be equal and adjacent heat exchange fins are preferred to be parallel. When the spaces between adjacent heat exchange fins are chosen to be equal, the spaces d3 between adjacent heat exchange fins should be at least 2mm, in order to ensure an enough heat exchange space between heat exchange fins to improve the heat exchange performance of the heat exchanger.

In the present embodiment, the heat exchange fins are straight-typed or wave-typed. Since the wave-typed heat exchange fin has a larger heat exchange surface than the straight-typed heat exchange fin, the heat exchange fin can be wave-typed in order to obtain a larger heat exchange surface, in order to further improve the heat exchange performance of the whole heat exchanger. However, the straight-typed heat exchange fin is easier to be made and produced, which can reduce the cost of the production device of the company and improve the manufacturing efficiency of the heat exchange fin. Therefore, the heat exchange fin in the present embodiment shown in the Fig.s is straight-typed.

The bent part 113 of the heat exchange tube is curved. In the heat exchange tube, the radian of the bent part on the folded position 114 is larger than that of the other bent position. Of course, the radian of the bent part on the folded position can be equal to that of the bent part on non-folded position, which is determined based on different product demands.

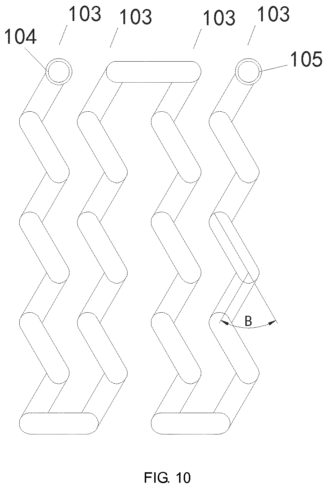

Referring to Fig. 10, in the heat exchange tube, except the bent tubing at the folded position arranged in a horizontal direction, the planes of adjacent bent tubing at other positions form an angle B, and the angel A and the angle B are consistent in angle size. The single bent tubing group besides the folded position in the heat exchange tube seems to be arranged in a wavy way, which ensures the bent and folded heat exchanger inserting into the corresponding socket smoothly. In the heat exchange tube shown in Fig. 10, there are 3 folded positions to form 4 bent tubing groups, however the amounts of both can be determined based on different volumes of the heat exchanger.

In the present embodiment, the external diameter φ of the heat exchange tube is 6 mm, 7 mm, 8 mm, 9 mm, 10 mm, 11 mm or 12.7 mm, the wall thickness d1 of the heat exchange tube is at least 0.4 mm, and the thickness d2 of the heat exchange fin is at least 0.09 mm.

The inner of the heat exchange tube has a smooth surface or guiding teeth are arranged on the inner wall along a length direction of the heat exchange tube, so that the fluid medium in the heat exchange tube can be guided better and the energy of the fluid medium can be transferred through the heat exchange tube better. The guiding teeth can be arranged on the inner wall of the heat exchange tube in a straight way or a spiral way. The examples of the guiding teeth are as follows.

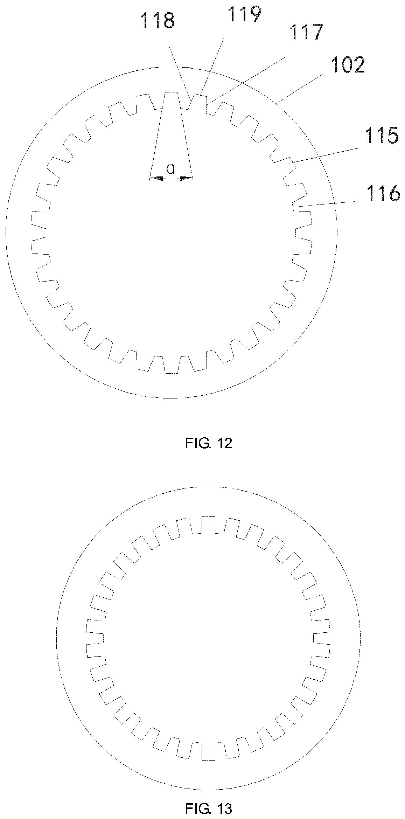

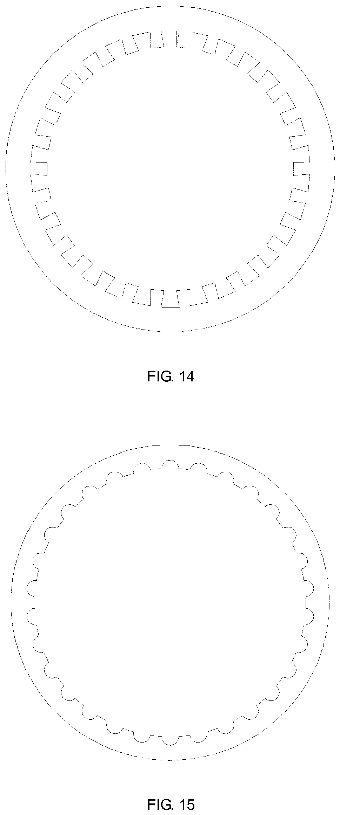

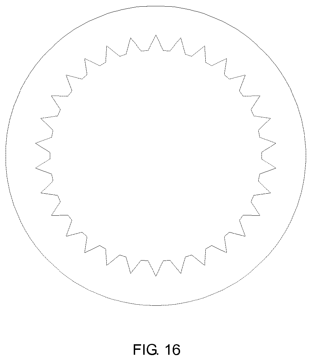

Referring to Fig. 12, 13, 14, multiple internal slots 115 concaved towards the inner of the heat exchange tube are provided uniformly on the inner of the heat exchange tube. Internal teeth 116 bulged towards the middle of the heat exchange tube are formed between adjacent internal slots. The internal slot and the internal teeth extend towards the axial direction of the inner of the heat exchange tube. The inner is surrounded by a first sidewall 117, a second sidewall 118 and a slot bottom wall 119, and the structure of the internal slot is depended on the angle α between the first sidewall 117 and the second sidewall 118. Referring to Fig. 12, the internal slot is a trapezoid which has a big top and a small bottom. Referring to Fig. 13, the internal slot is a rectangle whose top and bottom are equal. Referring to Fig. 14, the internal slot is a swallow tail which has a small top and a big bottom. Besides, the cross-section of the internal slot may be an arc shown in Fig. 15 or a triangle shown in Fig. 16. Different guiding teeth can be formed based on the internal slot with different cross-sections, in order to guide the fluid medium in the heat exchange tube more efficient and increase the contact area between the fluid medium and the heat exchange tube, and thus improving the heat exchange efficiency. On one hand, the guiding teeth on the inner wall of the heat exchange tube can decrease the weights of the heat exchange tube and heat exchanger, and it's difficult to be deformed in bending process which can ensure the product quality. On another hand, the guiding teeth can increase the contact area of the fluid medium in the tube to improve the heat exchange efficiency. Furthermore, the common tube with a smooth inner may be impacted to get a pit when assembling, in the case, bulges may be produced on the inner of the tube to perturb the flow stability and flow quantity of the fluid in the tube, which may lead to the non-uniform heat exchange surface, the insufficient heat exchange amount, and a short service life. However, guiding teeth can greatly improve the heat exchange coefficient of the whole heat exchanger since it can solve all these problems.

Compared to the traditional fin heat exchanger with copper tube, the heat exchanger in the present disclosure has following advantages.

1) The process is simplified and the production efficiency is high. The assembly time of the set of fins and heat exchange tube is greatly reduced, the labor and cost is low, and more products can be produced in a unit time with a unit cost.

2) The input of raw material is less and the cost is reduced. In traditional way, the space between the spliced fins need to be sealed by welding, but the welding will cause the weight of the fin to be larger, and will lead to damage to the fin to make the heat transfer effect worse. Now the two sets of fins are integrally formed so that there is no space between the fins. In the case of a same size, the area of an integral whole is larger than that of the combination; therefore the heat absorption and heat dissipation performances are good. At the same time, it avoids the deformation of the fins during the assembly process, which leads to a smaller or larger space between the fins, and eventually leads to the poor heat exchange performance of the heat exchanger as a whole.

3) Only one heat exchange tube is needed without additional connection elbows 120. In the conventional fin heat exchanger with copper tubes, two heat exchange tubes are spliced and then the openings are connected through connection elbows by welding to enable communicating. This method requires two heat exchange tubes, which is obviously higher in cost relative to the disclosure. The gas tightness of the heat exchange tubes needs to be detected before and after the elbows are welded, resulting in not only a high manufacturing requirement, but also a complicated process. However, in the disclosure, only one heat exchange tube is needed, so the manufacturing process is simple and fast. And no welding leads to no welding joint on the heat exchange tube, and no leakage problem of the heat exchange tube. And the working efficiency is greatly improved since the air tightness of the heat exchange tube is needed to be detected only once, which can greatly reduce the time, manpower and material resources.

4) The production is convenient and fast and the rate of finished product is high. In the conventional fin heat exchanger with copper tubes, it should be guaranteed that the spliced fins are on the same plane and seamlessly connected to each other, otherwise the fin heat exchanger will be reproduced if there is a deviation due to the unsure of the space between the fins. If not, the heat exchange effect of the heat exchanger will be affected. However, in the disclosure, the problem is completely avoided. The wind resistance between fins is greatly reduced, thus increasing the heat exchange rate, improving the heat exchange effect, and greatly reducing the useless work and improving the finished product rate at the same time.

5) In the disclosure, the bent part of the heat exchange tube is an arc section, which ensures the smooth flow of the fluid medium and the stable flow rate. But in the conventional fin heat exchanger with copper tubes, the connection between the connection elbows and the copper heat exchange tubes are not smooth but with solder joints. The diameter of the tube is reduced since the surface of the section of the tube is sunken inwards and has much wrinkle. The flow and velocity of the fluid in the tube are affected when the fluid flows through the elbows. The medium is flowing smoothly inside the tube originally, but it will become torrent at the elbows. It is very bad for the heat exchange, and it is very unsafe that the heat exchange tube will crack because of the unequally cold and heat. However, in the disclosure, the arc section at the bent part solves the problem, which is safe and reliable, and improves the heat exchange efficiency.

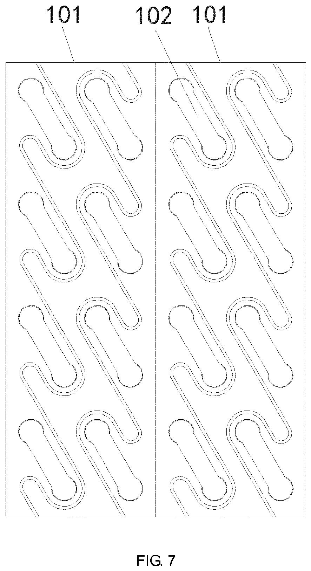

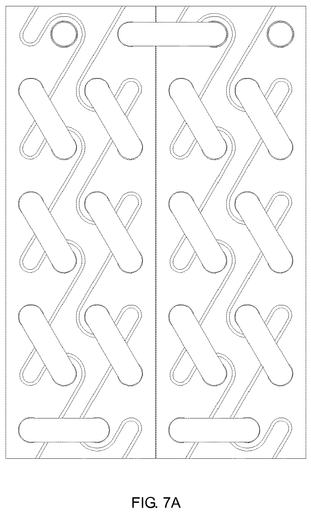

The heat exchanger according to the second embodiment of the disclosure will be illustrated referring to Fig. 7 and 7A.

The differences between the second embodiment and the first embodiment are as follows. In the second embodiment, the two sets of fins are arranged in parallel. The heat exchange fins in the two sets of fins can be arranged in different planes or in a same plane, and the heat exchange fins in the two sets of fins are independent to each other but not as a whole. The two sets of fins form a fin heat exchange unit for inserting a bent heat exchange tube. Similarly, on the fin heat exchange unit, 2-12 sockets are provided in its horizontal direction, and 2-20 sockets are provided in its vertical direction, for inserting the bent and folded heat exchange tube. Of course, the amount of the sets of fins can be determined based on demands, such as 3 sets, 4 sets and so on.

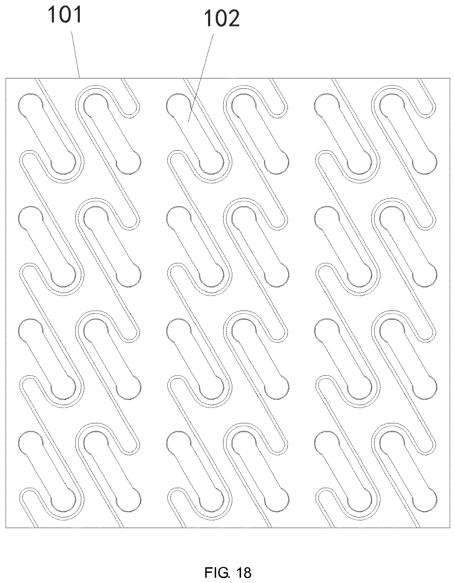

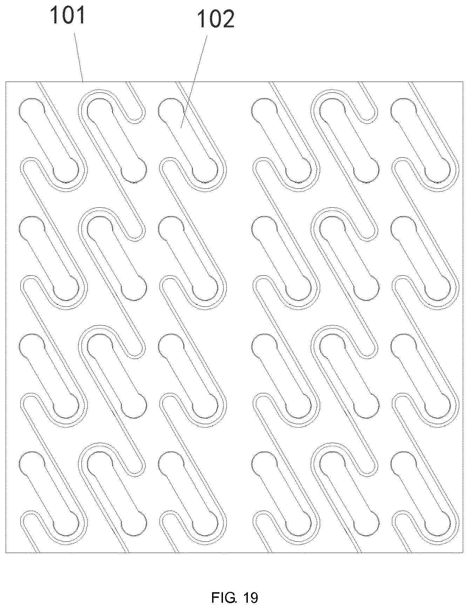

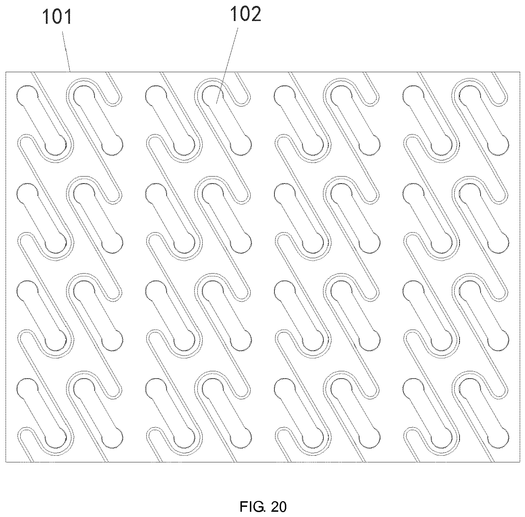

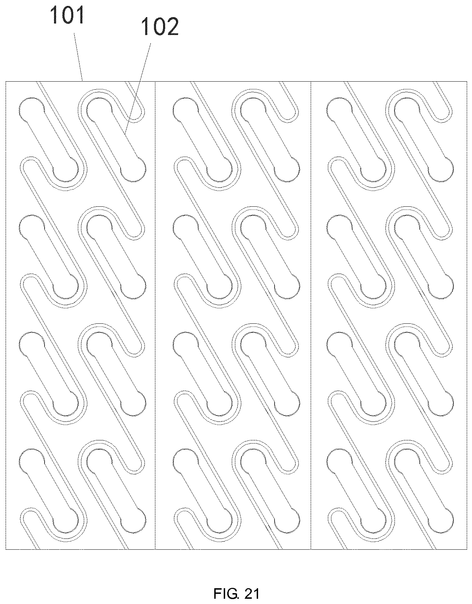

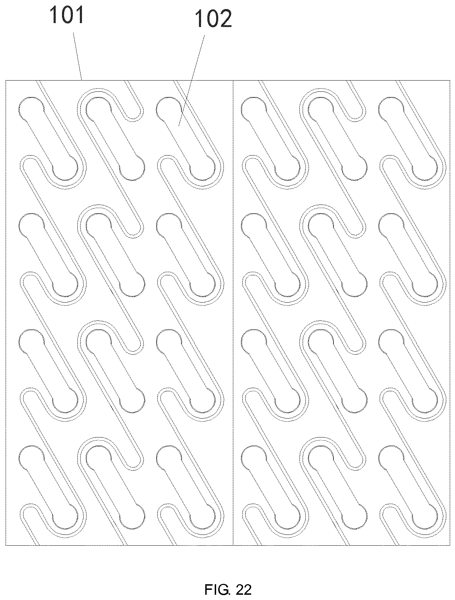

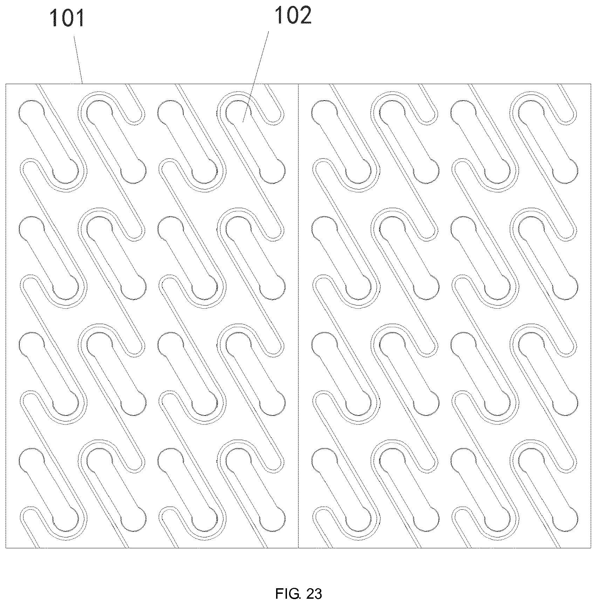

According to the heat exchanger in the first embodiment, the amount of columns of the bent tubing groups can be increased. Referring to Fig. 18 and 19, the heat exchanger has 6 columns of bent tubing groups, and referring to Fig. 20, the heat exchanger has 8 columns of bent tubing groups. Of course, the amount of columns of the bent tubing groups can be chosen based on the size of the assembly space. Besides, the amount of columns of the bent tubing groups can be also increased according to the second embodiment. Referring to Fig. 21, the heat exchanger has 6 columns of bent tubing groups in 3 sets of fins(2 columns of bent tubing groups in each set of fins), referring to Fig. 22, the heat exchanger has 6 columns of bent tubing groups in 2 sets of fins(3 columns of bent tubing groups in each set of fins), and referring to Fig. 23, the heat exchanger has 8 columns of bent tubing groups in 2 sets of fins(4 columns of bent tubing groups in each set of fins). For the convenience of manufacturing the heat exchanger, a single set of fins are preferred when the amount of columns of bent tubing groups is not more than 6, but more than 2 sets of fins are preferred when the amount of columns of bent tubing groups is more than 6.

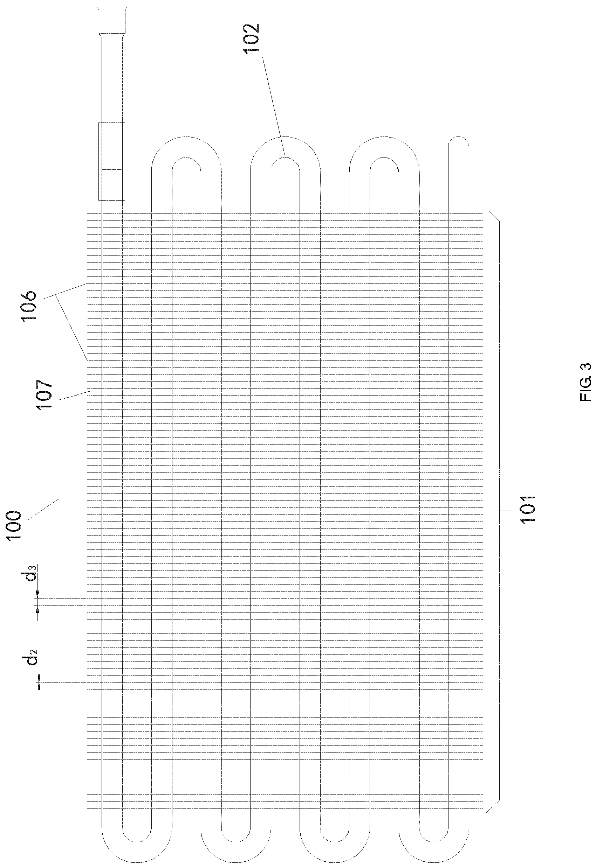

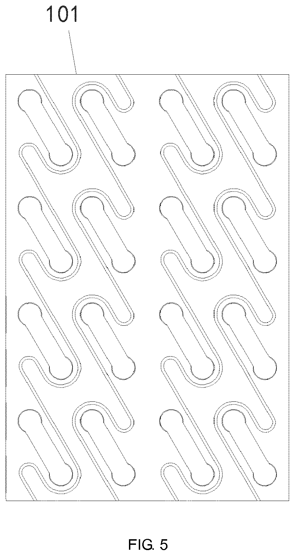

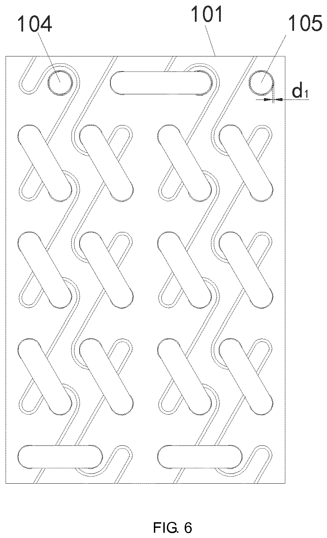

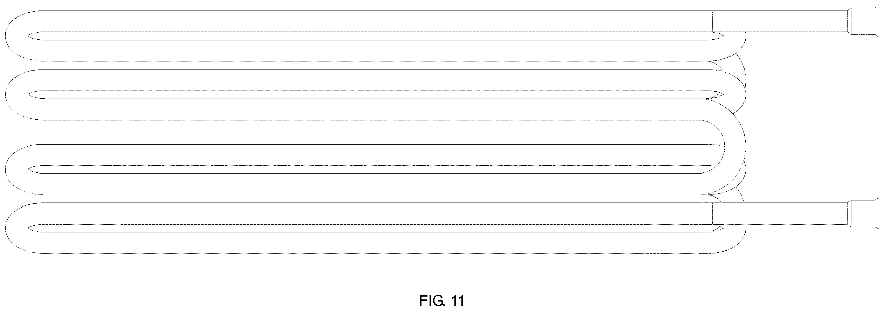

Referring to Fig. 3-6 and 8-11, a clothes washing machine or a clothes dryer comprises the aforementioned fin heat exchanger. The heat exchange tube is made of a metal tube which has been continuously bent multiple times and then folded at least once to form at least two columns of bent tubing, and then the heat exchange tube is inserted as a whole into the set of fins. It can improve the drying performance of the clothes washing machine and the clothes dryer. The fin heat exchanger can be any of the above embodiments, it can directly replace the heat exchange element in traditional clothes washing machine and clothes dryer, which can not only reduce the occupation space but also greatly improve the heat exchange performance.

A method for manufacturing the fin heat exchanger for a clothes washing machine or a clothes dryer comprises following steps.

In the first step, the total length of a metal tube and the amount of heat exchange fins in a set of fins are determined according to the size of the heat exchanger. The heat exchange tube can be made of a single aluminum tube, and the fin is integrally formed instead of being connected from 2 parts. It can not only save a lot on the cost, but also prevent the deformation of the fin that may reduce the heat exchange effect of the fin. And it can ensure the air tightness of the heat exchange tube and the firmness of the structure of the heat exchanger.

In the second step, the bending times N1, N2, N3, and the bending radius R1, R2, R3 of the first set of bent tubing group 121, the second set of bent tubing group 122 and the third set of bent tubing group 123 are determined. And then the bent wheels with a radius of R1, R2, R3 are chosen based on the bending radius. In this way, the aluminum tube can be bent quickly and accurately to form the heat exchanger tube, and thus saving time and greatly improving the work efficiency.

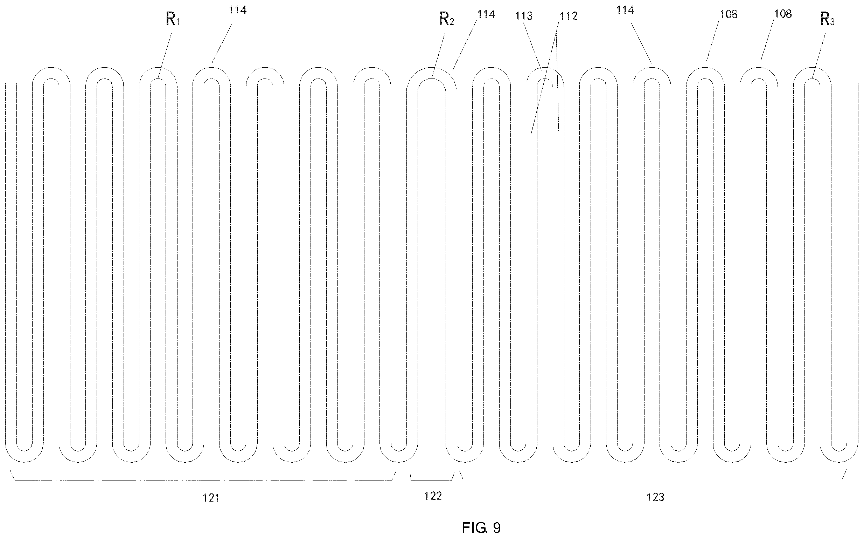

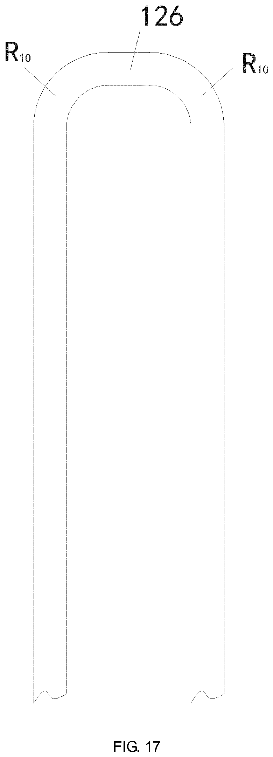

In the third step, the aluminum tube is equally divided to S sections after the bending times has been determined, wherein S= (N1+N2+N3+1). A bending point is selected on each section of the aluminum tube. Then the aluminum tube is manually bent at the bending points through the bent wheel with a radius of R1 for N1 times, and the first bent tubing group is made. The second bent tubing group is made by bending the aluminum tube for N2 times through the bent wheel with a radius of R2, and the third bent tubing group is made by bending the aluminum tube for N3 times through the bent wheel with a radius of R3. At the end, the heat exchange tube shown in Fig. 10 can be obtained after folding at the middle of the first bent tubing group, the second bent tubing group and the inserting portion of the third bent tubing group. This clear process can achieve high production requirements, improve the production and quality of the product, and improve the rate of finished products. During the bending process of the heat exchange tube, despite the bent tubing at the folded position, the adjacent bent tubing at other positions of the heat exchange tube are bent by 0-90°. When manually bending, R2 at the folded position and R1, R3 at the bent parts can be an entire R of an arc section (as shown in Fig. 9), or can be formed by the connection of two arc segments R10 and the middle straight section 126 (as shown in Fig. 17), which can be chosen based on different product demands.

In the fourth step, multiple sockets for inserting the bent tubing of the heat exchange tube are provided on each heat exchange fin by a stamping device, and the corresponding sockets on each heat exchange fin are overlapped after projection. The sockets are arranged on corresponding heat exchange fins in an inclined way. The socket comprises two curved jacks and a linear transfer slot located therebetween to connect the two curved jacks. The angle A between the central line of the sockets and the horizontal direction of the heat exchange fins is 0-90°. When the angle A is 0°, the whole sockets are consistent in direction with the horizontal direction of the heat exchange fin, namely the sockets are arranged in a horizontal direction on the heat exchange fin. When the angle A is 90°, the whole sockets are consistent in direction with the vertical direction of the heat exchange fin, namely the sockets are arranged in a vertical direction on the heat exchange fin. When the sockets are arranged in a inclined way, the angle A is preferably 50°-70°, such as 50°, 55°, 60°, 65° or 70°, which can improve the heat exchange surface and reduce the volume of the heat exchanger. It can be defined based on the demands. And it is preferred that the bending angle between the bent tubing is consistent with the angle of the sockets.

In the fifth step, the heat exchange fins are arranged successively on an assembling mold with a space between adjacent heat exchange fins, and the sockets at corresponding locations on adjacent heat exchange fins on the assembling mold are overlapped after projection in order to obtain a set of fins consisted of arranged heat exchange fins.

In the sixth step, the heat exchange tube from the third step is inserted into the set of fins from the fifth step as a whole, the bent tubes of the heat exchange tube are inserted into the corresponding sockets on the set of fins one by one, while the bent part of the bent tube in the heat exchange tube is outside of the set of fins after assembly. When assembling, the bent part at the bent tubing is inserted through the transfer slot while the two linear sections besides the bent tubing are inserted into two curved jacks. The heat exchanger can comprise one set of fins, or two and even more sets of fins.

In the seventh step, the external wall of the heat exchange tube and the internal hole of the socket are interference fitted to make a firmly combination between the heat exchange tube and the set of fins, thus obtaining an integral type of heat exchanger, and the manufacturing process can be finished after taking down the obtained heat exchanger from the assembling mold. Copper tubes are welded on both ends of the heat exchange tube, and the other ends of the copper tubes are sealed by sealing sleeves, and heat shrinkable tubes are sleeved at the welding parts of the copper tubes and the heat exchange tube to form a protective sleeve.

It can be seen from the test results that, the heat exchange area of the single system of the heat exchanger shown in Fig. 1 can be over 10 squares and the heat transfer coefficient K can be at least 1000W/m²°C. However, the heat exchange area of the single system of the heat exchanger in the disclosure can be over 14 squares, and the heat transfer coefficient K can be at least 3000W/ m²°C. Thus, the heat exchanger in the disclosure has a larger effective range and a better heat exchange performance.

## Claims

1. A fin heat exchanger for a clothes washing machine or a clothes dryer, comprising a set of fins and a heat exchange tube alternating with the set of fins; wherein, the heat exchange tube is made of a metal tube which has been continuously bent multiple times and then folded at least once to form at least two columns of bent tubing, then the heat exchange tube is inserted as a whole into the set of fins; two ends of the heat exchange tube locate outside of the set of fins, one end is acted as a medium inlet and the other end is acted as a medium outlet; the metal tube is an aluminum tube or a copper tube.

2. The fin heat exchanger of claim 1, wherein, the set of fins comprises multiple heat exchange fins arranged with a space between adjacent fins; multiple sockets are provided on each heat exchange fin for inserting the bent tubing of the heat exchange tube, and each socket corresponds to one bent tubing of the inserted heat exchange tube.

3. The fin heat exchanger of claim 2, wherein, the sockets on adjacent heat exchange fins in the set of fins are overlapped after being projected from upper or lower surfaces of the heat exchange fins.

4. The fin heat exchanger of claim 2, wherein, the set of fins comprises at least two heat exchange fins arranged side by side, the side-by-side heat exchange fins in adjacent sets of fins are integrally formed, and 2-12 sockets are provided along a horizontal direction of the integrally formed heat exchange fins, 2-20 sockets are provided along a vertical direction of the integrally formed heat exchange fins.

5. The fin heat exchanger of claim 4, wherein, the heat exchange fins in adjacent sets of fins are staggered or in a same plane, all the sets of fins form a fin heat exchange unit for inserting the heat exchange tube; 2-12 sockets are provided along the horizontal direction of the fin heat exchange unit, 2-20 sockets are provided along the vertical direction of the fin heat exchange unit.

6. The fin heat exchanger of claim 4 or 5, wherein, the sockets are arranged on corresponding heat exchange fins in an inclined way, an angle A between a central line of the sockets and the horizontal direction of the heat exchange fins is 0-90°.

7. The fin heat exchanger of claim 6, wherein, each socket comprises two curved jacks and a linear transfer slot located therebetween to connect the two curved jacks, two linear sections of the bent tubing in the heat exchange tube are inserted correspondingly into the two curved jacks respectively.

8. The fin heat exchanger of claim 4 or 5, wherein, spaces between adjacent heat exchange fins are equal or not, and adjacent heat exchange fins are parallel or the extending planes of adjacent heat exchange fins are crossed.

9. The fin heat exchanger of claim 8, wherein, the heat exchange fins are straight-typed or wave-typed.

10. The fin heat exchanger of claim 1, wherein, a bent part of the heat exchange tube is curved.

11. The fin heat exchanger of claim 1, wherein, except the bent part at folded position in the heat exchange tube, the planes of adjacent bent tubing at other position form an angle B.

12. The fin heat exchanger of any one of claims 1-5, 7 and 9-11, wherein, an external diameter φ of the heat exchange tube is 6-12.7mm, a wall thickness d1 of the heat exchange tube is at least 0.4mm, and a thickness d2 of the heat exchange fin is at least 0.09mm.

13. The fin heat exchanger of any one of claims 1-5, 7 and 9-11, wherein, an inner of the heat exchange tube has a smooth surface or guiding teeth are arranged on the inner along a length direction of the heat exchange tube.

14. A clothes washing machine or a clothes dryer comprising the fin heat exchanger of any one of claims 1-5, 7 and 9-11.
